**Europäisches Patentamt**

**European Patent Office**

**Office européen des brevets**

(19)

(11) Veröffentlichungsnummer : **0 225 351**
**B1**

(12) **EUROPÄISCHE PATENTSCHRIFT**

(45) Veröffentlichungstag der Patentschrift :
09.11.88

(21) Anmeldenummer : 86903324.1

(22) Anmeldetag : 14.05.86

(86) Internationale Anmeldenummer :
PCT/EP 86/00282

(87) Internationale Veröffentlichungsnummer :
WO/8607049 (04.12.86 Gazette 86/26)

(51) Int. Cl.⁴ : **C 02 F 11/12, B 01 J 2/20,
B 30 B 11/22, F 26 B 17/04**

(54) VORRICHTUNG ZUM TROCKNEN VON KLÄRSCHLAMM.

(30) Priorität : 22.05.85 DE 3518323

(43) Veröffentlichungstag der Anmeldung :
16.06.87 Patentblatt 87/25

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
AU-D- 552 866
DE-A- 2 530 184
FR-A- 2 444 495
GB-A- 1 513 651
GB-A- 2 015 419
US-A- 3 396 952

(73) Patentinhaber : SEVAR ENTSORGUNGSANLAGEN
GMBH
Poststrasse 2-6
D-8590 Marktredwitz (DE)

(72) Erfinder : MANZEI, Jürgen
Amundsenstrasse 12
D-8590 Marktredwitz (DE)

(74) Vertreter : LOUIS, PÖHLAU, LOHRENTZ & SEGETH
Kesslerplatz 1 Postfach 3055
D-8500 Nürnberg (DE)

## Beschreibung

Die Erfindung betrifft eine Vorrichtung zum Trocknen von Klärschlamm, mit einer Vortrocknungseinrichtung, einer der Vortrocknungseinrichtung nachgeschalteten Formgebungseinrichtung und mit einer der Formgebungseinrichtung nachgeschalteten Trocknungseinrichtung.

Bei einem bekannten Verfahren zum Trocknen von Klärschlamm wird ein Trommeltrockner verwendet, in den der Klärschlamm in flüssiger Form eingeleitet wird. Ausser dem Klärschlamm wird in den Trommeltrockner, der sich mit einer niedrigen Drehzahl in der Grössenordnung von 1 Umdrehung/min um seine Längsachse dreht, Heissluft mit einer Temperatur zwischen 600 °C und 800 °C eingeleitet. Durch die Heissluft wird der Flüssigkeitsanteil des Klärschlamms verdampft. Der verdampfte Flüssigkeitsanteil wird aus dem Trommeltrockner ausgeleitet, so dass im Trommeltrockner nur der Feststoffanteil des Klärschlamms mit einer bestimmten Restfeuchte zurückbleibt.

In Abhängigkeit von der Temperatur der in den Trommeltrockner eingeleiteten Heissluft und von der Rotationszeit des Trommeltrockners liegt die Restfeuchte des Klärschlammes nach der Trocknung in der Grössenordnung zwischen 10 und 20 Gew.-% oder darüber. Wird der getrocknete Klärschlamm bspw. in der Landwirtschaft als Düngemittel verwendet, so ist es vorteilhaft, wenn die Restfeuchte des getrockneten Klärschlammes in der Grössenordnung um 10 Gew.-% beträgt. Ein derartig trockener Klärschlamm kann mit den üblichen Düngemittel-Verteilvorrichtungen verteilt werden. Wenn der Klärschlamm auf einer Deponie abgelagert werden soll, ist es vorteilhaft, wenn seine Restfeuchte zwischen 10 und 20 Gew.-% beträgt. Bei der Kompostierung von Klärschlamm sind höhere Restfeuchten in der Grössenordnung zwischen 50 und 65 Gew.-% erwünscht.

Ein Trommeltrockner benötigt infolge der Anwendung von Heissluft einen grossen Energiebedarf. Ein weiterer Mangel eines derartigen Trommeltrockners besteht darin, dass der Heissluftzutritt mit grösser werdendem Volumen des in den Trommeltrockner eingeleiteten Klärschlammes immer kleiner wird, so dass es erforderlich ist, die eingeleitete Klärschlammenge richtig einzustellen.

Eine Vorrichtung der eingangs genannten Art ist aus der GB 20 15 419 A bekannt. Dort wird entwässerter Klärschlamm unter Druck in einen Extruder eingeleitet. Im Extruder wird ein Klärschlammerzeugnis hergestellt, das in Tablettenform gebracht wird. Diese eine bestimmte Länge aufweisenden Tabletten werden anschliessend getrocknet. Bei dem entwässerten Klärschlamm handelt es sich um Schlammstücke mit einem Gewichtsanteil von mehr als 25 Gew.-% Feststoffen. Im Extruder werden eine Vielzahl Stränge aus Schlammaterial erzeugt, die anschliessend abgeschnitten werden, um die Tabletten zu erzeugen.

Zu diesem Zweck ist eine eigene Schneidvorrichtung erforderlich, so dass sich ein gewisser baulicher Aufwand der Vorrichtung ergibt. Ausserdem muss diese Schneidvorrichtung angetrieben werden, wozu ein bestimmter Energiebedarf erforderlich ist.

Der Erfindung liegt die Aufgabe zugrunde, eine Vorrichtung der eingangs genannten Art zu schaffen, die einfach aufgebaut ist, mit einem geringen Energiebedarf auskommt und mit der die Restfeuchte des getrockneten Klärschlamms in einfacher Weise einstellbar ist.

Diese Aufgabe wird erfindungsgemäss dadurch gelöst, dass die Vortrocknungseinrichtung zur Umwandlung flüssigen Klärschlamms in einen Schlamm mit einer pastösen Konsistenz vorgesehen ist, dass die Formgebungseinrichtung, in der der pastöse Klärschlamm zu Partikeln geformt wird, eine Förderschnecke, eine unter der Förderschnecke angeordnete Aufnahmeeinrichtung für eine bestimmte Menge des mittels der Förderschnecke transportierten pastösen Klärschlamms, und eine unter der Aufnahmeeinrichtung angeordnete Matrize mit Perforationslöchern und mit einem Pressorgan aufweist, mit dem der pastöse Klärschlamm durch die Perforationslöcher der Matrize unter Ausbildung der würstchenförmigen Partikel durchgepresst wird, und dass die Trocknungseinrichtung zum Trocknen der geformten Partikel bis zu einer bestimmten Restfeuchte vorgesehen ist.

Die Vortrocknung kann in einer an sich bekannten Zentrifuge, Filterpresse o. dgl. durchgeführt werden.

Eine derartige Vortrocknungseinrichtung benötigt nur einen kleinen Energiebedarf für ihren Antrieb. Mit der Förderschnecke ist es möglich, den pastösen Klärschlamm kontinuierlich aus der Vortrocknungseinrichtung auszuleiten. Die Menge des mittels der Förderschnecke weiterbeförderten pastösen Klärschlamms wird durch die unter der Förderschnecke angeordnete Aufnahmeeinrichtung festgelegt. Der pastöse Klärschlamm wird an die ein Pressorgan aufweisende Matrize übergeben, wobei mit Hilfe des Pressorgans und der Perforationslöcher in der Matrize aus dem pastösen Klärschlamm die würstchenförmigen Partikel ausgebildet werden.

Die würstchenförmigen Partikel weisen einen Durchmesser in der Grössenordnung um 5 mm und eine Länge in der Grössenordnung von 40 mm auf. Es ist möglich, jede gewünschte Restfeuchte des getrockneten Klärschlamms einzustellen. Je niedriger die Restfeuchte des getrockneten Klärschlamms ist, umso niedriger sind die Kosten zum Transport des getrockneten Klärschlamms bspw. zu einer Deponie, zu einem landwirtschaftlichen Anwesen, zu einer Kompostierungsanlage o. dgl., weil dann nur wenig Flüssigkeitsballast mittransportiert werden muss. Die eine relativ grosse Oberfläche aufweisenden würstchenförmigen Partikel weisen nach der Trocknung eine Restfeuchte von mindestens 5 Gew.-% auf.

Die Aufnahmeeinrichtung kann als Längsrinne ausgebildet sein, die zur Längsrichtung der Förderschnecke konzentrisch und um die Längsachse der Förderschnecke schwenkbar ist. Die Längsrinne weist dabei eine Längsausdehnung auf, die mindestens der Längsausdehnung der Förderschnecke entspricht. Durch die um die Längsachse der Förderschnecke schwenkbare Ausbildung der Längsrinne ergibt sich eine Aufnahmeeinrichtung mit einem relativ kleinen Platzbedarf.

Der radiale Abstand zwischen der Längsachse der Förderschnecke und der Längsrinne kann einstellbar sein. Damit ist der Raum zwischen der Förderschnecke und der Längsrinne und die in der Aufnahmeeinrichtung mögliche Menge pastösen Klärschlammes einstellbar. Diese Menge bestimmt die pro Formgebungsarbeitsgang mögliche Menge würstchenförmiger Partikel.

Im Raum zwischen der Förderschnecke und der Längsrinne kann ein Abstreiforgan vorgesehen sein zum Abstreifen des pastösen Klärschlammes von der um die Längsachse der Förderschnecke schwenkbaren Längsrinne. Durch das Abstreiforgan wird der pastöse Klärschlamm daran gehindert, an der Aufnahmeeinrichtung festzukleben, so dass bei einer Verschwenkung der Längsrinne um die Längsachse der Förderschnecke die in der Aufnahmeeinrichtung vorhandene Menge pastösen Klärschlammes an die Formgebungsmatrize weitergeleitet wird.

Es hat sich als zweckmässig erwiesen, dass das Abstreiforgan zur Regelung der von der Förderschnecke durch die Längsrinne geförderten Menge pastösen Klärschlamms im Raum zwischen der Förderschnecke und der Rinne verstellbar ist. Durch die Verstellbarkeit des Abstreiforgans zur Regelung der von der Förderschnecke durch die Längsrinne geförderten Menge pastösen Klärschlamms ist es ebenfalls möglich, die Restfeuchte des getrockneten Klärschlamms einzustellen.

Das Pressorgan der Matrize ist vorzugsweise als Klappe ausgebildet, die eine Flächenausdehnung aufweist, die der halben Grundfläche der Matrize entspricht, und die Klappe ist um eine die Grundfläche der Matrize mittig halbierende Achse schwenkbar, die zur Längsachse der Förderschnecke parallel verläuft. Ein als Klappe ausgebildetes Pressorgan weist den Vorteil auf, dass die Klappe auf der einen Seite bereits wieder mit pastösem Klärschlamm beaufschlagt werden kann, während ihre entgegengesetzte Seite pastösen Klärschlamm unter Ausbildung würstchenförmiger Partikel durch die Perforationslöcher der Matrize drückt. Auf diese Weise ist es möglich, pro Zeiteinheit aus pastösem Klärschlamm eine relativ grosse Menge geformter, vorzugsweise würstchenförmiger Partikel zu bilden.

Als besonders vorteilhaft hat es sich erwiesen, dass die Klappe in der Nähe der Matrize eine langsamere Schwenkbewegung ausführt als im übrigen Schwenkbereich zwischen den beiden durch die Matrize gegebenen Umkehrstellungen der Klappe. Durch die langsamere Schwenkbewegung der Klappe in der Nähe der Matrize wird zwischen der Matrize und der Klappe eine Saugwirkung erzielt, mit deren Hilfe im pastösen Klärschlamm vorhandene Härchen, Fäden o. dgl. mit der Klappe von den Perforationslöchern mitgenommen werden, so dass Verstopfungen der Perforationslöcher durch solche Härchen oder Fäden in einfacher Weise verhindert werden. Die von der Klappe angesaugten und mitgenommenen Härchen oder Fäden werden beim nachfolgenden Schwenkvorgang der Klappe seitlich um eine kleine Strecke verschoben, so dass sie im nächsten Pressvorgang durch die Perforationslöcher der Matrize durchgepresst werden. Auf diese Weise ergibt sich eine störunanfällige Formung des pastösen Klärschlamms zu Partikeln mit einer relativ grossen Oberfläche, insbesondere zu würstchenförmigen Partikeln.

Unter der Formgebungseinrichtung kann eine Bandfördereinrichtung vorgesehen sein, auf die die würstchenförmigen Partikel fallen und die Bandfördereinrichtung kann Perforationslöcher aufweisen, wobei der Trockengasstrom von den Perforationslöchern durch die Schicht der auf der Bandfördereinrichtung aufgeschichteten Partikel oder von der Schicht durch die Perforationslöcher der Bandfördereinrichtung durchströmen. Die Bandfördereinrichtung kann sich schrittweise oder kontinuierlich bewegen. Durch geeignete Wahl der Vorschubgeschwindigkeit der Bandfördereinrichtung ist es möglich, die Höhe der Schicht derauf der Bandfördereinrichtung aufgeschichteten Partikel einzustellen. Die Höhe der Schicht, die Vorschubgeschwindigkeit der Bandfördereinrichtung und die Temperatur des Trocknungsgasstromes, der die Schicht der Partikel auf der Bandfördereinrichtung durchströmt, sind Parameter, welche die Restfeuchte des partikelförmigen getrockneten Klärschlammes bestimmen. Es wäre auch möglich, die zu trocknenden würstchenförmigen Partikel in einem definierten Volumen frei fallen zu lassen und die freifallenden Partikel von unten und beispielsweise auch von der Seite mit einem Trocknungsgasstrom anzuströmen.

Es hat sich als vorteilhaft erwiesen, dass die Bandfördereinrichtung von einem die Trocknungseinrichtung bildenden Trocknungsofen umgeben ist, der in Längsrichtung der Bandfördereinrichtung mehrere Kammern aufweist zur Lenkung des Trocknungsgasstroms nacheinander abwechselnd von der Schicht der Partikel durch die Perforation der Bandfördereinrichtung und von der Perforation durch die Partikelschicht. Infolge einer solchen abwechselnden Führung des Trocknungsgasstromes von der Partikelschicht durch die Perforation und umgekehrt von der Perforation durch die Partikelschicht ergibt sich eine homogene, kontinuierlich abnehmende Durchfeuchtung der Partikel. Dadurch wird eine zu schnelle Trocknung nur der Oberflächenschichten der einzelnen Klärschlammpartikel vermieden. Eine zu schnelle Trocknung der Oberflächenschichten der Partikel würde zu einer Verkrustung derselben führen, die eine weitere Trocknung der Partikel erschwert. Durch die erfindungsgemässe Ausbildung des Trocknungsofens wird die Wärmeenergie des Trocknungsgasstromes optimal an die Klärschlammpartikel zur Trocknung derselben abgegeben.

Im Trocknungsofen kann unter der Bandfördereinrichtung mindestens eine zusätzliche Fördereinrichtung vorgesehen sein, wobei untereinanderliegende Fördereinrichtungen in entgegengesetzte Vorschubrichtungen angetrieben werden. Durch diese untereinander angeordneten Fördereinrichtungen werden die würstchenförmigen Partikel mehrmals durch den Trocknungsofen hindurchbefördert, so dass die Wärmeenergie des den Trocknungsofen durchströmenden Trocknungsgasstromes noch besser ausgenutzt wird. Ausserdem ist es bei Anwendung einer geraden Anzahl Fördereinrichtungen möglich, den getrockneten Klärschlamm auf der Seite des Trocknungsofens auszugeben, auf welcher sich die Formgebungseinrichtung befindet. Bei diesen zusätzlichen Fördereinrichtungen kann es sich ebenfalls um Bandfördereinrichtungen handeln. Wird unter der Bandfördereinrichtung nur eine einzige zusätzliche Fördereinrichtung angewandt, so wird diese vorzugsweise als sogenannter Kratzerförderer ausgebildet.

Zum Entfernen der würstchenförmigen Partikel von der Bandfördereinrichtung und zum Freimachen ihrer Perforationslöcher kann eine Zusatzeinrichtung vorgesehen sein. Diese Zusatzeinrichtung kann eine Schlageinrichtung, eine Bürste o. dgl. sein. Die Zusatzeinrichtung ist in Vorschubrichtung der Bandfördereinrichtung vor dem Trocknungsofen angeordnet.

Je nach Verwendung des getrockneten Klärschlamms beträgt seine Restfeuchte mit dem erfindungsgemässen Verfahren 5-15 Gew.-% bei Verwendung in der Landwirtschaft als Düngemittel, 10-20 Gew.-% bei Lagerung auf einer Deponie oder 50-65 Gew.-% bei Verwendung zur Kompostierung.

In der Zeichnung ist eine erfindungsgemässe Vorrichtung zum Trocknen von Klärschlamm schematisch dargestellt, die nachfolgend beschrieben wird. Es zeigen :

Fig. 1 einen Teil der Vorrichtung von der Vortrocknungseinrichtung für den flüssigen Klärschlamm bis zur Einleitung des zu Partikeln geformten Klärschlamms in eine Trocknungseinrichtung, und

Fig. 2 eine schematische Darstellung einer Trocknungseinrichtung zum Trocknen der in einer Formgebungseinrichtung geformten Partikel aus Klärschlamm.

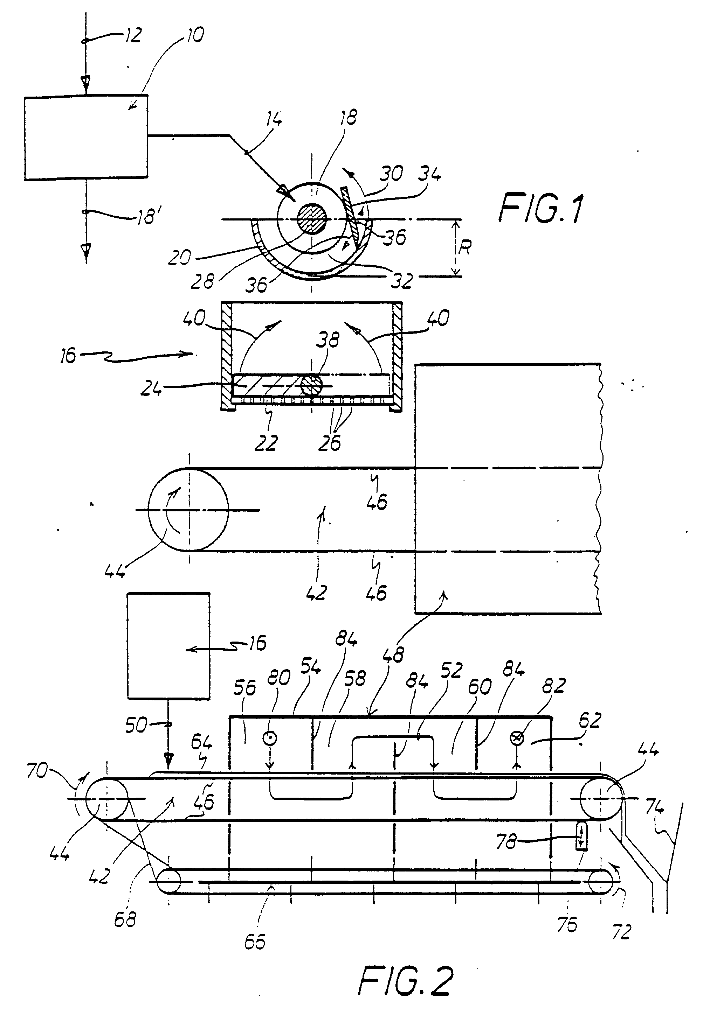

Fig. 1 zeigt eine Vortrocknungseinrichtung 10, in die flüssiger Klärschlamm eingeleitet wird. Die Einleitung des flüssigen Klärschlammes in die Vortrocknungseinrichtung 10 ist durch den Pfeil 12 angedeutet. In der Vortrocknungseinrichtung 10, bei der es sich um eine Zentrifuge, Filterpresse o. dgl. handeln kann, wird der flüssige Klärschlamm 12 in eine pastöse Konsistenz umgewandelt. Der pastöse Klärschlamm wird in Richtung des Pfeiles 14 in einer Formgebungseinrichtung 16 zu Partikeln mit einer relativ grossen Oberfläche geformt. Die vom pastösen Klärschlamm getrennte Flüssigkeit wird aus der Vortrocknungseinrichtung ausgeleitet. Das ist durch den Pfeil 18' angedeutet.

Die Formgebungseinrichtung 16 weist eine Förderschnecke 18, eine unter der Förderschnecke 18 angeordnete Aufnahmeeinrichtung 20 für eine bestimmte Menge des mittels der Förderschnecke 18 transportierten pastösen Klärschlammes 14, und eine unter der Aufnahmeeinrichtung 20 angeordnete Matrize 22 mit einem Pressorgan 24 auf. Die Matrize 22 weist eine Länge auf, die mindestens der Länge der Aufnahmeeinrichtung 20 entspricht. Mit der Bezugsziffer 26 sind die in der Matrize 22 vorgesehenen Perforationslöcher bezeichnet. Der pastöse Klärschlamm wird mit dem Pressorgan durch die Perforationslöcher 26 der Matrize 22 unter Ausbildung der würstchenförmigen Partikel durchgepresst.

Die Aufnahmeeinrichtung 20 ist als Längsrinne ausgebildet, die zur Längsachse 28 der Förderschnecke 18 konzentrisch und um die Längsachse 28 der Förderschnecke 18 schwenkbar ist. Die Schwenkbarkeit der als Längsrinne ausgebildeten Aufnahmeeinrichtung 20 ist in dieser Figur durch den Pfeil 30 angedeutet. Zur Festlegung der von der Aufnahmeeinrichtung 20 aufgenommenen Menge pastösen Klärschlamms kann der radiale Abstand zwischen der Längsachse 28 der Förderschnecke 18 und der Aufnahmeeinrichtung 20, der in dieser Figur durch R gekennzeichnet ist, verstellbar sein. Im Raum 32 zwischen der Förderschnecke 18 und der Aufnahmeeinrichtung 20 ist ein Abstreiforgan 34 vorgesehen, das zum Abstreifen des pastösen Klärschlamms von der um die Längsachse 28 der Förderschnecke 18 in Richtung des Pfeiles 30 schwenkbaren Aufnahmeeinrichtung dient. Wird die Aufnahmeeinrichtung 20 in Richtung des Pfeiles 30 um die Längsachse 28 der Förderschnecke 18 verschwenkt, so fällt eine bestimmte Menge des pastösen Klärschlammes 14 auf die Matrize 22 bzw. auf das Pressorgan 24. Zur Regelung der in der Aufnahmeeinrichtung 20 vorhandenen Menge pastösen Klärschlammes ist es auch möglich, das Abstreiforgan 34 im Raum 32 zwischen der Förderschnecke 18 und der Aufnahmeeinrichtung 20 in Richtung des Doppelpfeiles 36 verstellbar auszubilden.

Das Pressorgan 24 der Matrize 22 ist als Klappe ausgebildet, die eine Flächenausdehnung aufweist, die der halben Grundfläche der Matrize 22 entspricht. Das klappenförmige Pressorgan 24 ist um eine die Grundfläche der Matrize 22 mittig halbierende Achse 38 schwenkbar. Diese Verschwenkbarkeit des klappenförmigen Pressorgans 24 ist durch die einander zugewandten Pfeile 40 angedeutet. Die Achse 38 des klappenförmigen Pressorgans 24 verläuft zur Längsachse 28 der Förderschnecke 18 parallel.

Die mittels der Matrize 22 und des in Richtung der Pfeile 40 hin- und herklappbaren Pressorgans 24 geformten würstchenförmigen Partikel fallen auf eine Bandfördereinrichtung 42, die unter der Formgebungseinrichtung 16 angeordnet ist. Die Bandfördereinrichtung 42 ist in dieser Figur nur abschnittweise dargestellt. Sie weist Umlenkrollen 44 auf, von denen in dieser Figur nur eine zu erkennen ist. Ausserdem weist sie ein Förderband 46 mit Perforationslöchern auf. In dieser Figur ist ausserdem eine Trocknungseinrichtung 48 abschnittweise dargestellt, in der die würstchenförmigen Partikel einem Trocknungsgasstrom ausgesetzt werden.

Fig. 2 zeigt die Formgebungseinrichtung 16, wie sie oben beschrieben worden ist, schematisch in einem Block. Durch den Pfeil 50 ist angedeutet, dass die würstchenförmigen Partikel auf die Bandfördereinrichtung 42 fallen, mit der sie durch die Trocknungseinrichtung 48 vorgeschoben und einem Trocknungsgasstrom 52 ausgesetzt werden. Die Bandfördereinrichtung 42 ist von der Trocknungseinrichtung 48 in Form eines Trocknungsofens 54 umgeben, der in Längsrichtung der Bandfördereinrichtung 42 mehrere Kammern 56, 58, 60, 62 aufweist, in denen der Trocknungsgasstrom 52 nacheinander abwechselnd von der Schicht 64 der würstchenförmigen Partikel durch die Perforation des Förderbandes 46 bzw. von der Perforation des Förderbandes 46 durch die Partikelschicht 64 geleitet wird. In dieser Figur sind mit der Bezugsziffer 44 die beiden zueinander parallel angeordneten Umlenkrollen für das Förderband 46 der Bandfördereinrichtung 42 bezeichnet. Unter der Bandfördereinrichtung 42 ist eine zusätzliche Fördereinrichtung 66 vorgesehen, die mit Hilfe eines Kreuztriebes 68 in entgegengesetzter Vorschubrichtung angetrieben wird. Die entgegengesetzten Vorschubrichtungen sind in dieser Figur durch die Pfeile 70 und 72 angedeutet. Der getrocknete Klärschlamm fällt über die zweite Umlenkrolle 44, die in dieser Figur auf der rechten Seite dargestellt ist, in eine Sammeleinrichtung 74. Die zweite Fördereinrichtung 66 ist schematisch als an sich bekannter Kratzerförderer dargestellt. Zum Entfernen der würstchenförmigen Partikel von der Bandfördereinrichtung 42 und insbesondere zum Freimachen der Perforationslöcher des Förderbandes 46 der Bandfördereinrichtung 42 ist eine Zusatzeinrichtung 76 vorgesehen, die in Richtung des Doppelpfeiles 78 bewegt wird und gegen das Förderband 46 der Bandfördereinrichtung 42 schlägt. Mit der Bezugsziffer 80 ist ein Einlass für den Trocknungsgasstrom 54 bezeichnet, durch welchen der Trocknungsgasstrom 52 mit einer Temperatur in der Grössenordnung um 180 °C in den Trocknungsofen 54 bzw. in dessen erste Kammer 56 eintritt. Mit der Bezugsziffer 82 ist ein Auslass bezeichnet, durch den der Trocknungsgasstrom 52 den Trocknungsofen 54 bzw. dessen Kammer 62 mit einer niedrigeren Temperatur wieder verlässt. Die zuletzt genannte Temperatur liegt in der Grössenordnung um 80 °C. Mit der Bezugsziffer 84 sind Zwischenwände bezeichnet, durch die der Trocknungsgasstrom 52 abwechselnd von der Schicht 64 der Partikel durch die Perforation des Förderbandes 46 bzw. von der Perforation des Förderbandes 46 durch die Partikelschicht 64 geleitet wird. Durch die mäanderförmige Leitung des Trocknungsgasstromes 52 durch die Partikelschicht 64 ergibt sich eine homogene Durchfeuchtung und eine kontinuierlich abnehmende Restfeuchte der würstchenförmigen, auf dem Förderband 46 aufgeschichteten Klärschlammpartikel.

**Patentansprüche**

1. Vorrichtung zum Trocknen von Klärschlamm, mit einer Vortrocknungseinrichtung, einer der Vortrocknungseinrichtung nachgeschalteten Formgebungseinrichtung und mit einer der Formgebungseinrichtung nachgeschalteten Trocknungseinrichtung, dadurch gekennzeichnet, dass die Vortrocknungseinrichtung zur Umwandlung flüssigen Klärschlamms in einen Schlamm mit einer pastösen Konsistenz vorgesehen ist, dass die Formgebungseinrichtung (16), in der der pastöse Klärschlamm zu Partikeln geformt wird, eine Förderschnecke (18), eine unter der Förderschnecke (18) angeordnete Aufnahmeeinrichtung (20) für eine bestimmte Menge des mittels der Förderschnecke transportierten pastösen Klärschlamms (14), und eine unter der Aufnahmeeinrichtung (20) angeordnete Matrize (22) mit Perforationslöchern (26) und mit einem Pressorgan (24) aufweist, mit dem der pastöse Klärschlamm durch die Perforationslöcher (26) der Matrize (22) unter Ausbildung der würstchenförmigen Partikel durchgepresst wird, und dass die Trocknungseinrichtung zum Trocknen der geformten Partikel bis zu einer bestimmten Restfeuchte vorgesehen ist.

2. Vorrichtung nach Anspruch 1, dadurch gekennzeichnet, dass die Aufnahmeeinrichtung (20) als Längsrinne ausgebildet ist, die zur Längsachse (28) der Förderschnecke (18) konzentrisch und um die Längsachse (28) der Förderschnecke (18) schwenkbar ist.

3. Vorrichtung nach Anspruch 2, dadurch gekennzeichnet, dass der radiale Abstand (R) zwischen der Längsachse (28) der Förderschnecke (18) und der Aufnahmeeinrichtung (20) verstellbar ist.

4. Vorrichtung nach Anspruch 2 oder 3, dadurch gekennzeichnet, dass im Raum (32) zwischen der Förderschnecke (18) und der Aufnahmeeinrichtung (20) ein Abstreiforgan (34) vorgesehen ist zum Abstreifen des pastösen Klärschlamms von der um die Längsachse (28) der Förderschnecke (14) schwenkbaren Aufnahmeeinrichtung (20).

5. Vorrichtung nach Anspruch 4, dadurch gekennzeichnet, dass das Abstreiforgan (34) zur Regelung der von der Förderschnecke (18) durch die Aufnahmeeinrichtung (20) geförderten Menge pastösen Klärschlamms im Raum (32) zwischen der Förderschnecke (18) und der Aufnahmeeinrichtung (20) verstellbar ist.

6. Vorrichtung nach Anspruch 1, dadurch gekennzeichnet, dass das Pressorgan (24) auf der Matrize (22) als Klappe ausgebildet ist, die eine Flächenausdehnung aufweist, die der halben Grundfläche der Matrize (22) entspricht, und dass die Klappe um eine die Grundfläche der Matrize (22) mittig halbierende Achse (38) schwenkbar ist, die zur Längsachse (28) der Förderschnecke (18) parallel verläuft.

7. Vorrichtung nach Anspruch 6, dadurch gekennzeichnet, dass die Klappe in der Nähe der Matrize (22) eine langsamere Schwenkbewegung ausführt als im übrigen Schwenkbereich zwischen den beiden durch die Matrize (22) gegebenen Umkehrstellungen der Klappe.

8. Vorrichtung nach einem der vorhergehenden Ansprüche, dadurch gekennzeichnet, dass unter der Formgebungseinrichtung (16) eine Bandfördereinrichtung (42) vorgesehen ist, auf die die würstchenförmigen Partikel fallen, und dass die Bandfördereinrichtung (42) Perforationslöcher aufweist, wobei der Trocknungsgasstrom (52) von den Perforationslöchern durch die Schicht (64) der auf der Bandfördereinrichtung (42) aufgeschichteten Partikel oder von der Schicht (64) durch die Perforationslöcher in der Bandfördereinrichtung (42) durchströmt.

9. Vorrichtung nach Anspruch 8, dadurch gekennzeichnet, dass die Bandfördereinrichtung (42) von einem die Trocknungseinrichtung (48) bildenden Trocknungsofen (54) umgeben ist, der in Längsrichtung der Bandfördereinrichtung (42) mehrere Kammern (56-62) aufweist zur Leitung des Trocknungsgasstromes (52) nacheinander abwechselnd von der Schicht (64) der Partikel durch die Perforation der Bandfördereinrichtung (42) und von der Perforation durch die Partikelschicht (64). •

10. Vorrichtung· nach Anspruch 8 oder 9, dadurch gekennzeichnet, dass im Trocknungsofen (54) unter der Bandfördereinrichtung (42) mindestens eine zusätzliche Fördereinrichtung (66) vorgesehen ist, wobei untereinanderliegende Fördereinrichtungen (42, 66) in entgegengesetzte Vorschubrichtungen angetrieben werden.

11. Vorrichtung nach einem der Ansprüche 8 bis 10, dadurch gekennzeichnet, dass zum Entfernen der getrockneten Partikel von der Bandfördereinrichtung (42) und zum Freimachen ihrer Perforationslöcher eine Zusatzeinrichtung (76) vorgesehen ist.

## Claims

1. Equipment for drying sewage sludge, having a predrying device, a shaping device downstream of the predrying device and a drying device downstream of the shaping device, characterized in that the predrying device is provided for converting fluid sewage sludge into a sludge of pasty consistency, that the shaping device (16), in which the pasty sewage sludge is shaped into particles, comprises a conveyor screw (18), a receiving device (20), located underneath the conveyor screw (18), for a defined quantity of the pasty sewage sludge (14) transported by means of the conveyor screw, and a matrix (22) located underneath the receiving device (20) and having perforation holes (26) and a pressing element (24), by means of which the pasty sewage sludge is pressed through the perforation holes (26) of the matrix (22) with the formation of sausage-shaped particles, and that the drying device is provided for drying the shaped particles down to a defined residual moisture content.

2. Equipment according to Claim 1, characterized in that the receiving device (20) is in the form of a longitudinal channel which is concentric to the longitudinal axis (28) of the conveyor screw (18) and is pivotable about the longitudinal axis (28) of the conveyor screw (18).

3. Equipment according to Claim 2, characterized in that the radial distance (R) between the longitudinal axis (26) of the conveyor screw (18) and the receiving device (20) is adjustable.

4. Equipment according to Claim 2 or 3 characterized in that, in the space (32) between the conveyor screw (18) and the receiving device (20), a scraping element (34) is provided for scraping the pasty sewage sludge off from the receiving device (20) which is pivotable about the longitudinal axis (28) of the conveyor screw (18).

5. Equipment according to Claim 4, characterized in that the scraping element (34) is adjustable for regulating the quantity of pasty sewage sludge, delivered by the conveyor screw (18) through the receiving device (20), in the space (32) between the conveyor screw (18) and the receiving device (20).

6. Equipment according to Claim 1, characterized in that the pressing element (24) on the matrix (22) is constructed as a flap having a superficial area which corresponds to half the base area of the matrix (22), and that the flap is pivotable about an axis (38) which bisects the base area of the matrix (22) in the middle and which runs parallel to the longitudinal axis (28) of the conveyor screw (18).

7. Equipment according to Claim 6, characterized in that the flap executes a pivoting movememt which is slower in the vicinity of the matrix (22) than in the remaining pivoting range between the two reversal points of the flap, given by the matrix (22).

8. Equipment according to one of the preceding Claims, characterized in that, underneath the shaping device (16), a belt conveyor device (42) is provided, onto which the sausage-shaped particles drop, and that the belt conveyor device (42) has perforation holes, the stream (52) of drying gas flowing from the perforation holes through the layer (64) of the particles heaped on the belt conveyor device (42) or from the layer (64) through the perforation holes in the belt conveyor device (42).

9. Equipment according to Claim 8, characterized in that the belt conveyor device (42) is surrounded by a drying oven (54) which forms the drying device (48) and which has, in the longitudinal direction of the belt conveyor device (42), a plurality of chambers (56-62) for passing the stream (32) of drying gas successively and alternately from the layer (64) of particles through the perforation of the belt conveyor device (42) and from the perforation through the particle layer (64).

10. Equipment according to Claim 8 or 9, characterized in that at least one additional conveyor device (66) is provided in the drying oven (54) underneath the belt conveyor device (42), conveyor devices (42, 66) located underneath one another being driven in opposite forward directions.

11. Equipment according to one of Claims 8 to 10, characterized in that an additional device (76) is provided for removing the dried particles from the belt conveyor device (42) and for clearing the perforation holes of the latter.

## Revendications

1. Appareil de séchage de boues de curage, comportant un dispositif de préséchage, un dispositif de mise en forme monté en aval du dispositif de préséchage et un dispositif de séchage monté en aval du dispositif de mise en forme, caractérisé en ce que le dispositif de préséchage est prévu pour la transformation de boues de curage liquides en une boue à consistance pâteuse, en ce que le dispositif de mise en forme (16), dans lequel la boue pâteuse est façonnée en particules, présente une vis transporteuse (18), un dispositif de réception (20), agencé en dessous de la vis transporteuse (18) et prévu pour une quantité déterminée de la boue pâteuse (14) transportée au moyen de la vis transporteuse, et une matrice (22) qui est agencée en dessous du dispositif de réception (20) et qui est pourvue de trous perforés (26) et d'un organe presseur (24), par lequel la boue pâteuse est pressée à travers les trous perforés (26) de la matrice (22), avec réalisation de particules en forme de petits boudins, et en ce que le dispositif de séchage est prévu pour le séchage des particules façonnées jusqu'à un taux d'humidité résiduaire déterminé.

2. Appareil suivant la revendication 1, caractérisé en ce que le dispositif de réception (20) est réalisé sous la forme d'une goulotte longitudinale qui est concentrique à l'axe longitudinal (28) de la vis transporteuse (18) et qui est capable de pivoter autour de l'axe longitudinal (28) de la vis transporteuse (18).

3. Appareil suivant la revendication 2, caractérisé en ce que la distance radiale (R) entre l'axe longitudinal (28) de la vis transporteuse (18) et le dispositif de réception (20) est ajustable.

4. Appareil suivant l'une des revendications 2 et 3, caractérisé en ce que, dans l'espace (32) situé entre la vis transporteuse (18) et le dispositif de réception (20) il est prévu un organe de raclage (34) pour racler la boue pâteuse du dispositif de réception (20) capable de pivoter autour de l'axe longitudinal (28) de la vis transporteuse (18).

5. Appareil suivant la revendication 4, caractérisé en ce que l'organe de raclage (34) peut être ajusté entre la vis transporteuse (18) et le dispositif de réception (20) pour régler la quantité de boue pâteuse transportée à travers le dispositif de réception (20) depuis la vis transporteuse (18).

6. Appareil suivant la revendication 1, caractérisé en ce que l'organe de pressage (24) sur la matrice (22) est réalisé sous la forme d'un clapet qui présente une superficie qui correspond à la moitié de la surface de fond de la matrice (22) et en ce que le clapet est capable de pivoter autour d'un axe (38) qui divise en deux, centralement, la surface de fond de la matrice (22) et qui est disposé parallèlement à l'axe longitudinal (28) de la vis transporteuse (18).

7. Appareil suivant la revendication 6, caractérisé en ce que le clapet effectue, à proximité de la matrice (22), un mouvement de pivotement plus lent que dans la zone de pivotement restante entre les deux positions d'inversion du clapet, données par la matrice (22).

8. Appareil suivant l'une des revendications précédentes caractérisé en ce qu'il est prévu, en dessous du dispositif de mise en forme (6) un dispositif de transport à bande (42) sur lequel les particules en forme de petits boudins tombent, et en ce que le dispositif de transport à bande (42) présente des trous perforés, le courant de gaz de séchage (52) passant des trous perforés à travers la couche (64) des particules disposées en couche sur le dispositif de transport à bande (42) ou de la couche (64) à travers les trous perforés dans le dispositif de transport à bande (42).

9. Dispositif suivant la revendication 8, caractérisé en ce que le dispositif de transport à bande (42) est entouré par un four de séchage (54) qui forme le dispositif de séchage (48) et qui présente, dans la direction longitudinale du dispositif de transport à bande (42), plusieurs compartiments (56-62) pour conduire le courant gazeux de séchage (52) successivement de manière alternée, de la couche (64) des particules à travers la perforation du dispositif de transport à bande (42) et de la perforation à travers la couche de particules (64).

10. Dispositif suivant l'une des revendications 8 et 9, caractérisé en ce qu'au moins un dispositif de transport supplémentaire (66) est prévu dans le four de séchage (54) en dessous du dispositif de transport à bande (42), les dispositifs de transport situés l'un au-dessous de l'autre (42, 66) étant entraînés dans des sens d'avancement opposés.

11. Dispositif suivant l'une des revendications 8 à 10, caractérisé en ce qu'un dispositif supplémentaire (76) est prévu pour enlever les particules séchées du dispositif de transport à bande (42) et pour libérer ses trous perforés.

FIG.1

FIG.2